(19) **Europäisches Patentamt European Patent Office Office européen des brevets**

(11) **EP 2 047 213 B1**

(12) **EUROPEAN PATENT SPECIFICATION**

(45) Date of publication and mention
of the grant of the patent:
**10.09.2014 Bulletin 2014/37**

(51) Int Cl.:
***G01C 21/32*** (2006.01)          ***G09B 29/00*** (2006.01)

(21) Application number: **07766328.4**

(22) Date of filing: **23.07.2007**

(86) International application number:
**PCT/GB2007/002770**

(87) International publication number:
**WO 2008/009965 (24.01.2008 Gazette 2008/04)**

(54) **GENERATING A MAP**

ERZEUGUNG EINER LANDKARTE

CRÉATION D'UNE CARTE

(84) Designated Contracting States:
**DE FR GB IT**

(30) Priority: **21.07.2006 GB 0614529**

(43) Date of publication of application:
**15.04.2009 Bulletin 2009/16**

(73) Proprietor: **TRW Limited**
**Solihull, West Midlands B90 4AX (GB)**

(72) Inventors:
• **TUCKER, Mark, Richard**
**Leicestershire LE17 4EP (GB)**

• **HEENAN, Adam, John**
**Sheffield S26 4UH (GB)**

(74) Representative: **Harris, David James**
**Barker Brettell LLP**
**100 Hagley Road**
**Edgbaston**
**Birmingham**
**B16 8QQ (GB)**

(56) References cited:
**EP-A- 0 358 628**          **JP-A- 10 264 841**
**US-A1- 2004 167 669**     **US-A1- 2004 230 340**

**Description**

This invention relates to a method of generating a map, and a parking assistance apparatus generating a map.

In the United Kingdom, vehicular accident statistics show that 36% of fatal accidents are at, or within, 20 metres of intersections. In Japan, 46% of fatal vehicular accidents occur at or near intersections, whereas in the United States of America, 23% of fatal accidents are at or related to intersections. It is therefore desirable to increase intersection safety.

One of the ways it is proposed this may be achieved is for the vehicle's automatic systems being able to accurately locate the vehicle within an intersection relative to a map of the known features of the intersection. In conjunction with other information about the intersection (such as other vehicle positions, traffic light status and so on) information regarding the position of the vehicle can be used to warn the driver of the vehicle about potential hazards. Position-determining systems such as the Global Positioning System (GPS) are well known, but are of limited accuracy - a positioning error of tens of metres as is possible with GPS is not acceptable in measuring the positioning of a vehicle in an intersection.

However, in order that such a system work, it is important to be able to simply and reliably generate the map.

We are aware of the United States patent application No. US 2004/0167669, which discloses a method of creating a map of landmark features surrounding a robot vehicle as it travels around its locality. The robot learns to correct its dead reckoning location by determining its true position from where landmarks it has mapped are. In order to map the landmark points, the robot uses a video camera to determine the three-dimensional extent of the landmark features.

We are also aware of JP 10-264841, which discloses a parking device which uses video sensors to determine the position of a white line surrounding the parking space. The device then works out the correct steering angle for driving the vehicle into the space and brakes once the vehicle is appropriately positioned.

According to a first aspect of the invention, we provide a method of generating a map in accordance with claim 1. In accordance with a second aspect of the invention, we provide a method of generating a map in accordance with claim 2. Optional features are recited in the dependent claims.

Accordingly, these are simple methods of generating a map using images captured from a vehicle. Preferably the map is of a road, typically of a road intersection and may be of a single intersection. The map may additionally or alternatively be a map of a car park, a single car parking space or so on. The map may comprise points relating to visible features on the surface of the road, typically salient features such as lane markings and so on or visible salient features on or adjacent to the road (such as street furniture such as traffic lights, bus stops and the like). The processor may select only salient features for inclusion on the map.

Preferably, the method comprises capturing at least one further image as the vehicle moves, detecting points relating to features in the at least one further image, and comparing the points in the image and the at least one further image. The method may also comprise updating the map based on the comparison of the points between the image and the at least one further image. By comparing the points detected in successive images, the system may be able to build up more confidence in points that are repeatedly detected. Indeed, the method may comprise assigning each point recorded on the map a confidence and increasing that confidence when the point is repeatedly detected.

The method may include the step of repeatedly moving the vehicle past the scene, and capturing images of the scene from the vehicle each time the vehicle passes the scene; each time the vehicle passes the scene, identifying points relating to features in each image and using these points to update the map. The accuracy of the map may therefore be increased.

Typically, the method will comprise the detection of edges visible in the captured images. The step of detection of points relating to features in the captured images may comprise detecting lines in the captured images, then calculating the end points of the lines.

The method may further comprise the step of measuring the motion of the vehicle and from this predicting where the points in the at least one further image will be. Indeed, the method may comprise the step of looking for points in the at least one further image in the region where they are predicted to be. This has been found to improve the processing efficiency of the method. The motion may be detected by means of a speed sensor and/or yaw rate sensor associated with the vehicle.

Furthermore, by comparing the points in the image and the at least one further image, the method may comprise the step of determining the motion of the vehicle. By motion we may mean at least one of speed, heading angle, velocity and yaw rate. The motion of the vehicle determined by comparing the points from the differing images may be more accurate than the measurement used to predict the location of the points in the at least one further image; the method may therefore, as a useful by-product, more accurately output the motion of the vehicle than the estimate used during the method.

The step of determining the position of points in the image may comprise the step of transforming the position of points in the image into a position relative to the vehicle. This may comprise carrying out a perspective transform. The pitch, roll and/or vertical heave of the vehicle may be calculated in order to compensate therefor, or they may be assumed to be constant.

The image and the at least one further image may be captured using a video camera and may be optical images of the scene. By optical, we typically mean an image captured using visible light, or alternatively IR or UV light. Alternatively, the image may be RADAR, LIDAR, SONAR or other similar images of the scene. "Visible" should be construed accordingly.

The step of predicting where points will be in the at least one further image may comprise modelling the motion of the vehicle. This may be performed by using a predictive filter, such as a Kalman filter, or an Extended Kalman filter (an extended Kalman Filter typically incorporates non-linear relationships that are useful for this idea, for example the relationships between measurements, states and outputs and may incorporate necessary algorithms, for example perspective transforms and inverse perspective algorithms). The predictive filter may take, as an input, the position of the points in the image and the speed and heading angle (and/or yaw rate). The filter would then output predicted positions of the points.

In order to predict the position of the points thus predicted in the at least one further image, it may be necessary to perform an inverse perspective transform to transform the position of the points relative to a surface (such as a road surface) into the position in the at least one further image. The transform may be of the form:

$$x = \frac{hX}{H-Y} \quad \text{and} \quad z = \frac{fh}{H-Y}$$

where X and Y are the image co-ordinates referenced from the centre of the line of the captured image, H is indicative of the position of the horizon, f is the focal length of the camera, h is the height of the camera above the ground, z is the distance from the camera in the direction in which the camera is pointing and x the distance from the camera in the perpendicular direction.

Where lines are detected, the step of comparing points in the image and the at least one further image may comprising determining the angle of the line relative to a datum and comparing the points corresponding to a line only if the angle is within an expected range. This avoids confusing points in successive images that are not related.

Once the points have been compared, the actual position in the at least one further image of the points whose position was predicted in the at least one further image may be calculated. From these actual positions, the position of the vehicle on the map may be calculated. Where a predictive filter is used, the actual positions may be used to update the predictive filter. This is especially useful with a Kalman filter or Extended Kalman Filter.

The step of updating the predictive filter may comprise the determination of the vehicle motion from the comparison of the points from the image and the at least one further image. This is especially true of the use of an (extended) Kalman filter, where the motion of the vehicle can conveniently form part of the state inputs to the Kalman filter.

The step of recording the position of points on the map may include only recording points that meet at least one criterion. The at least one criterion may include at least one of:

• the confidence of that point
• the feature with which the point is associated, such as the shape of a line for which the point is an end.

The vehicle may be a road vehicle, such as a car. Alternatively, it may be a waterborne vessel such as a boat or an aircraft such as an aeroplane or helicopter.

The map may be used by the vehicle in order to determine its location at a later time. Alternatively, the map may be stored and supplied to another vehicle, or preferably a plurality of vehicles, for use in locating the other vehicles when they are in the same locality - be it an intersection or any other location - as the original vehicle.

According to a third aspect of the invention, we provide a parking assistance apparatus for a vehicle, comprising a video camera arranged to, in use, capture images of a parking space as the vehicle is driven past the space, the parking space having visible lines demarcating the space, and a processor arranged to, in use, map the lines demarcating the space using the method of the first aspect of the invention and captured images from the video camera, and guidance means to guide the vehicle into the space.

Accordingly, a vehicle equipped with such an apparatus may generate a map of a space "on-the-fly", and then provide guidance to a driver of the vehicle on the best mode of driving into the space. This system does not require any special markings of the space; simple painted lines as are well known in the prior art will suffice.

There now follows, by way of example only, embodiments of the invention described with reference to the accompanying drawings, in which:

**Figure 1** shows a car fitted with an apparatus according to a first embodiment of the invention;

**Figure 2** shows the use of the apparatus of Figure 1 in capturing images of the scene surrounding the vehicle;

**Figure 3** shows the vehicle of Figure 1 located on a map;

**Figure 4** is a flow diagram showing the method carried out by the apparatus of Figure 1;

**Figure 5** shows a sample image captured by the apparatus of Figure 1;

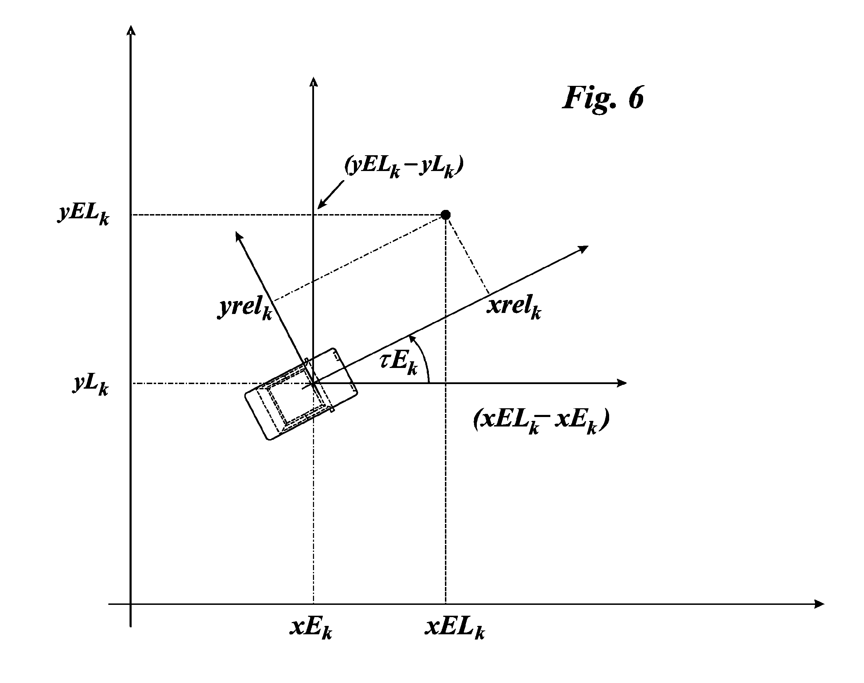

**Figure 6** shows the relationship between different coordinate systems for locating the vehicle on the map of Figure 3;

**Figure 7** shows the data flow through the apparatus of Figure 1;

**Figure 8** shows the operation of the Extended Kalman Filter of the apparatus of Figure 1; and

**Figure 9** shows a parking space as used by the apparatus of the second embodiment of the invention.

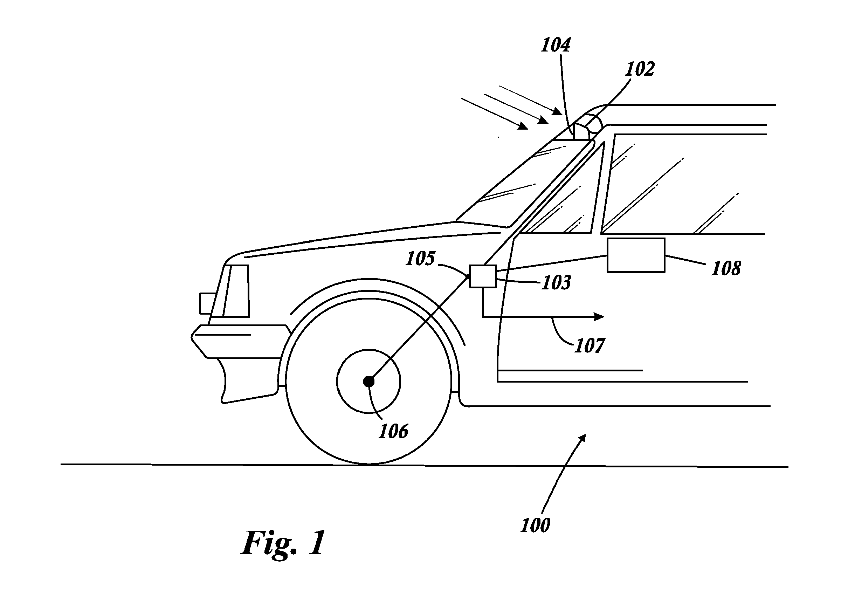

A car 100 is shown in Figure 1, fitted with an apparatus according to an embodiment of the present invention. The apparatus comprises a video camera 102 arranged to capture images of the scene ahead of the vehicle. The camera is, in the present embodiment, based on a National Semiconductor greyscale CMOS device with a 640x480 pixel resolution. Once every 40ms, a window - 640x240 pixels in size - is captured from the centre of the imager field of view using a Cameralink™ Framegrabber.

These images are then fed into processor 103. This has an input 105 for an output of a wheel speed and yaw rate sensor 106 of the car 100 (although this sensor could be two discrete sensors). The processor 103 also has an output 107, on which the position of the vehicle on a map is output as described below. This output can be displayed to the driver on a suitable display (not shown). The system also comprises a memory and removable media drive 108 connected to the processor, which stores a map as it is generated.

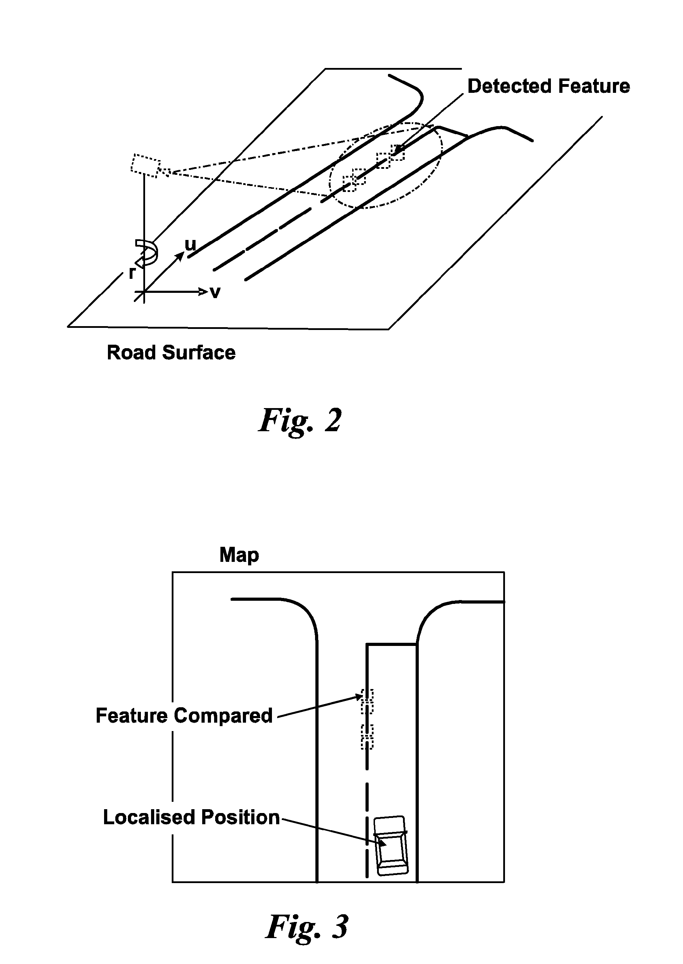

The system design is based upon the concept of generating a low-level feature map of visual landmarks of, say, an intersection from a processed image from the video camera 102 mounted in the vehicle 100. The map (shown in Figure 3) comprises a list of points relating to features on the road throughout an intersection. The points denote the ends of lines forming shapes on the road. The position of the points with respect to the vehicle and, assuming the vehicle's initial position and motion through the area of interest, can be estimated by tracking the measurements of the positions of these features relative to the vehicle using a tracking filter. This is shown in Figure 2 and 3 of the accompanying drawings.

With reference to Figure 2, assuming that the initial position of the vehicle is approximately known, for example using a GPS sensor (not shown) the system can predict the position of lines on the road surface for the next image captured. The position of each line is then measured by searching for the predicted lines in the captured image. Each predicted line then has a position measurement associated with it.

Once the lines have been associated, the error between the prediction and measurement can be determined. The error is used to correct the position estimate of the points within the intersection and the position of the vehicle, and hence position the vehicle on the map (Figure 3). This new vehicle position estimate is then used to predict the position of the lines in the next image ready for the next iteration of the localisation algorithm.

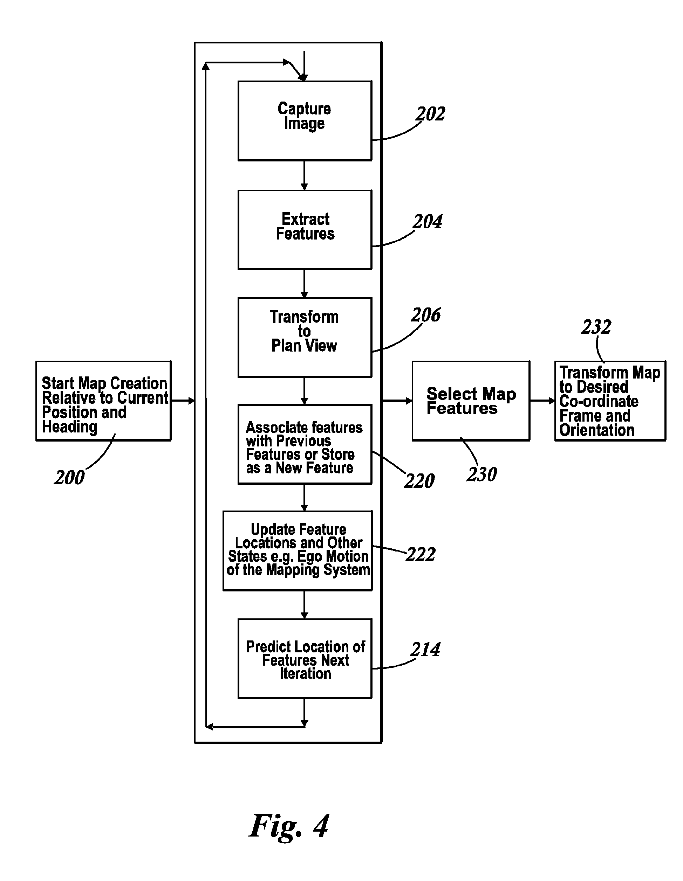

The process carried out by the processor 103 is shown in Figure 4 of the accompanying drawings. Map creation starts at step 200, with the map origin at the current location and map axis in line with the camera axis.

In the next step 202, an image is captured into the processor 103. The image is made available to the image processing functions as a 2-D array of integer values representing pixel intensity (0 to 255). Immediately after the image is captured, a timestamp, which is read from the vehicle CAN bus, is stored.

The image-processing step 204 follows. The image is processed with a Sobel edge detection kernel, plus optimised line tracing and line combination algorithms to extract parameterised line endpoints in image coordinates. The processor 103 looks preferentially for features that have clear transitions between dark and light. The system will detect centre lines or outlines of visible road markings (for example, centre of dashed lines, centre of stop lines, outline of directional arrows, etc). The system will search for all lines within the image. The system determines the position of the lines by recording the points corresponding to their endpoints.

In perspective transform step 206, each of the detected lines is transformed from the image into the equivalent position on the road surface using a perspective transform (PT). Perspective transforms are well known in the art. The PT uses a simple model of the imager and lens to translate pixel positions in the image into relative positions on the road surface. To reduce algorithm complexity, the current PT implementation is based on the assumption that the road ahead of the vehicle is flat; whilst this reduces the complexity of the algorithm, this assumption is not strictly necessary.

Once points relating to features have been detected and transformed, line association 220 is performed in the image plane and finds whether the measured points detected in the previous step match the predicted position of points found in previous iterations. In the first iteration, there will of course be no previously determined points. If there are, then the system will have made a prediction of where those points will be in the present iteration as will be discussed below. The newly detected points are compared as to the angle and position of the lines they form against predicted lines. If a good match is found, the association function assigns a high confidence to that line measurement, which is recorded together with the position of the point as the map. If no match is found, the association function returns the position of the new point to be recorded on the map as a newly-discovered feature with a relatively low confidence.

The processing of this image at step 220 can be accelerated by limiting the search for pre-existing points to regions of interest (ROI) around the predicted position of lines within the image. When the search for each line occurs, the system knows what type of line to search for (because it is stored in the feature map). This improves the robustness for line searching because it can select the appropriate line-tracing algorithm. However, it is still desirable to search the entire map for new features.

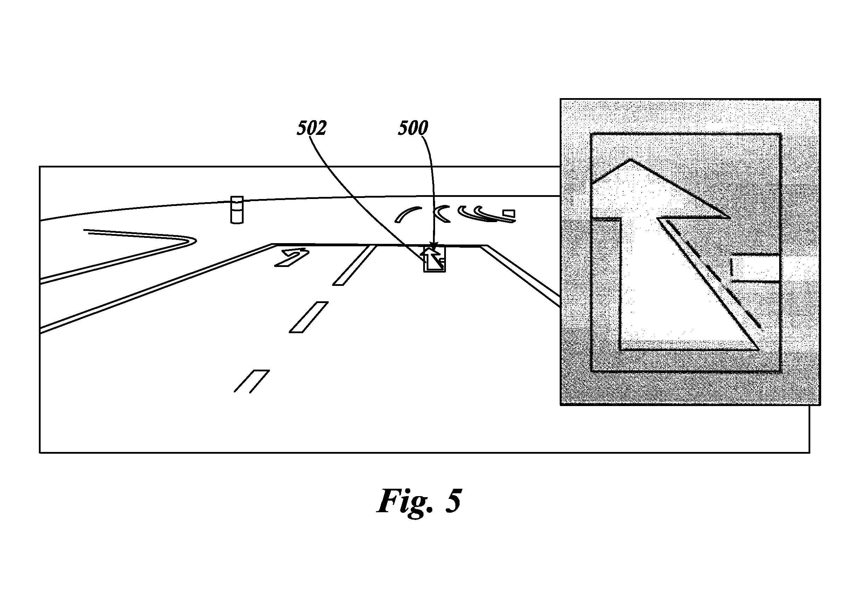

An example captured image can be seen in Figure 5 of the accompanying drawings. This shows an example road marking 500, in which the system has selected a region of interest 502, shown in more detail in the inset of that Figure. The lines relating to that road marking will only be searched for in that region of interest 502. In many cases such as that shown, there will be many lines close together and the image processing will return more than one measured (solid in the Figure) line for each predicted (dashed in the Figure) line. Matching of the length and angle of the line will help make a correct match.

Line prediction errors are calculated in the image plane. For these errors to be used to update the vehicle location model, the errors must be transformed from the image plane into the vehicle relative coordinates. They must then be transformed from the vehicle relative coordinates into the absolute coordinates system (as shown in Figure 5 of the accompanying drawings). The image plane to relative coordinates transformation is a function of the imager and lens combination and is the opposite of the IPT discussed above.

As the vehicle moves through the intersection, the absolute vehicle heading will change. When the heading changes, the relative to absolute position function must be re-evaluated.

The combined relationship between line prediction errors and absolute position prediction error is called the measurement to state transformation. The vehicle location model states exist in the absolute position coordinates system so that the vehicle position within the intersection can be tracked. The transformation between measurements and states is re-calculated for each iteration of the localisation algorithm and is used to transform both the line measurement and confidence in the measurement into the absolute coordinates system.

It is then necessary to update, at step 222, the state of a model of the vehicle. In this embodiment, an Extended Kalman Filter (EKF) has been chosen to model and predict the vehicle motion. Kalman filters are well known as a means of estimating information from indirectly related or noisy measurements and are often applied to tracking problems.

The model is a constant velocity, constant yaw rate model with inputs from vehicle wheel speed, yaw rate and the line measurements. The initial location and heading are set as the origin as discussed above. The initial vehicle dynamics (that is, velocity and yaw rate) are taken from vehicle sensors (wheel speed and yaw rate sensor 106).

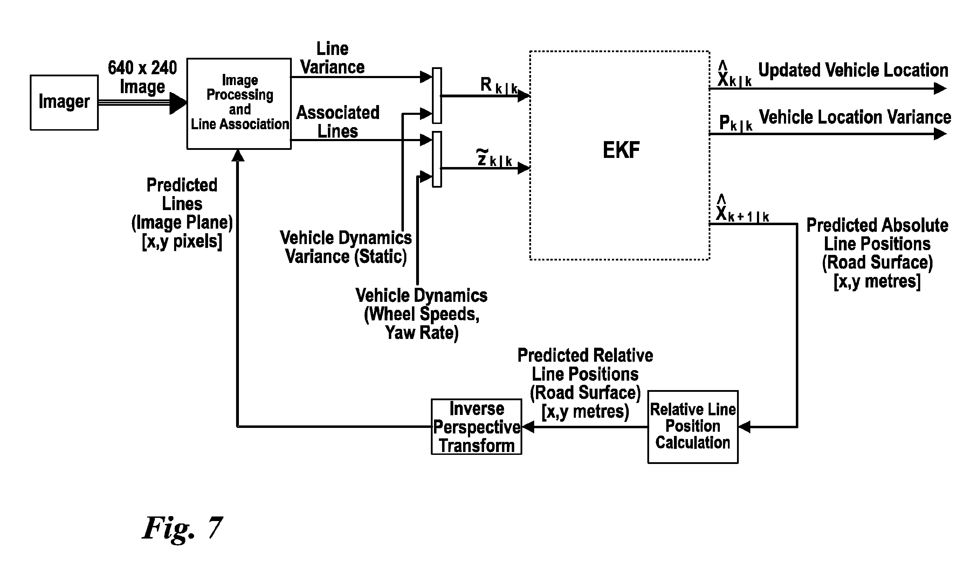

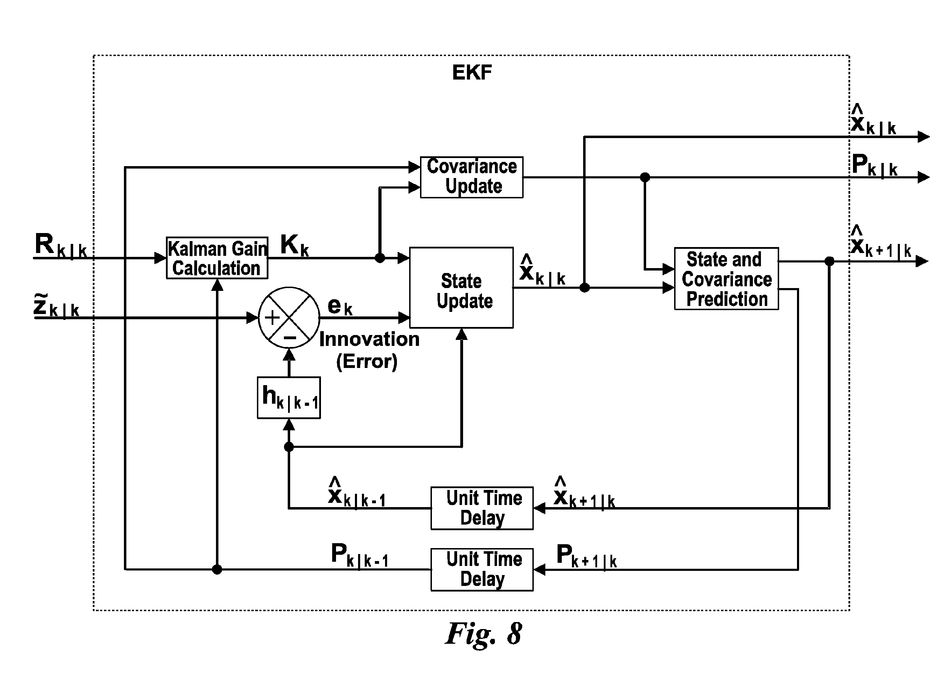

The EKF can then be used to predict, from the motion of the vehicle and the previously detected lines, where lines will occur in the next image. The EKF is shown in more detail in Figure 7 and 8 of the accompanying drawings. The EKF takes as inputs the measurements from both the imager and vehicle dynamics sensors combined to form the current measurement vector $\tilde{z}_{k|k}$. The confidence in the measurements (variances) are combined to form diagonal matrix $R_{k|k}$.

The gain of the filter - the Kalman Gain ($K_k$) - is calculated based on both the measurement variance (confidence that the measurement is correct, $R_{k|k}$) and the covariance (confidence that the previous prediction is correct, $P_{k|k-1}$). This is combined with the innovation ($e_k$) - the error between the measurements, transformed into state domain using $h_{k|k-1}$. This is a calculation which transforms the system state predictions into the measurement domain; this allows the predictions to be subtracted from the measurements to give a measurement error. A similar calculation is embedded into the Kalman Gain ($K_k$) calculation, which is derived from measurement variances and the state covariance. This in turn converts the measurement error (when multiplied by $K_k$) into the state update term according to:

$$\text{Updated State} = \text{Predicted State} + K_k * e_k$$

Once the Kalman Gain is calculated, the previous predictions of the system states ($x_{k|k-1}$) and covariance ($P_{k|k-1}$) are corrected to give the current estimate of the vehicle state ($x_{k|k}$, including the vehicle position and velocity, and the line point positions) and covariance ($\boldsymbol{P}_{k|k}$).

The constant velocity, constant yaw-rate model is then used to predict the state of the vehicle ($\boldsymbol{x}_{k+1|k}$) at the next iteration. The covariance is also predicted using the system model plus a term to describe the process noise of the system. This process noise is a measure of how accurate the model is expected to be (for example, how constant the velocity and yaw-rate is expected to be).

The output from the EKF is therefore the corrected state estimate and covariance for the current image. This provides the current estimate of the vehicles location and heading plus the confidence in that estimate. It also provides an estimate of the position of the lines, and the corresponding confidences, in the next captured image. The method then repeats from step 202.

It is also necessary to select (at step 230) which features are recorded as the map. Not all features that have been tracked will be required on the final map. The set of features tracked may be edited automatically or manually to remove unwanted features and leave only salient ones. Automatic removal would typically involve discardal of features that do not meet criteria such as the confidence the system has in the relevant feature, the amount of data recorded by the feature or so on.

Finally, at step 232, the map is transformed from the reference frame where the vehicle starts at the origin to a desired reference frame. This the origin, or by measuring accurately the position of one of the features found by the system. The transformed map thus generated is stored by media drive 108 for distribution to other systems.

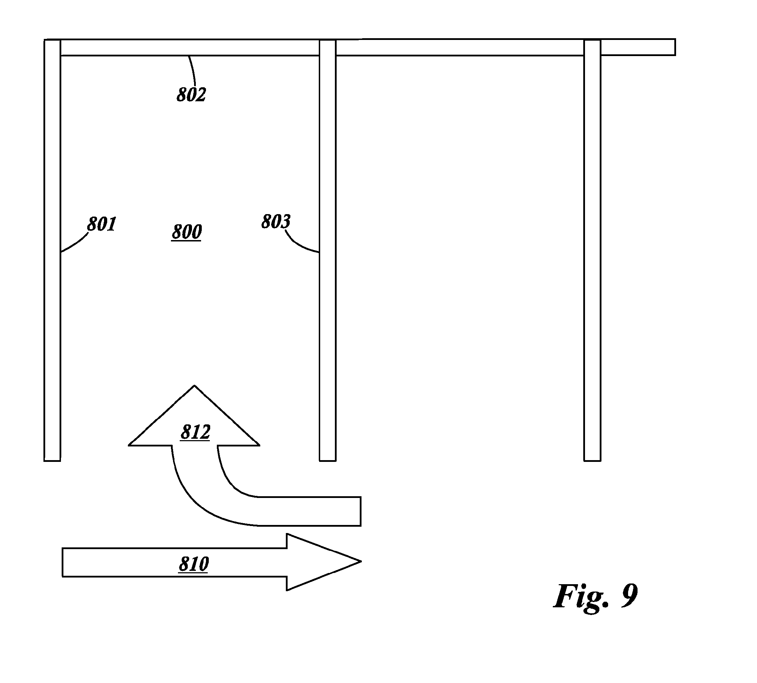

A second embodiment of the invention will now be demonstrated with respect to Figure 9 of the accompanying drawings. The apparatus embodying this embodiment is the same as that shown in Figure 1 of the accompanying drawings, and features in common with the first embodiment of the invention are referred to using the same indicia.

This embodiment provides a parking assistance apparatus for a car 100. It is well known that parking a car can be, for some drivers, a tricky experience. It is therefore desirable to provide some assistance in this process. Figure 9 of the accompanying drawings shows an example "bay" parking space 800, demarcated by painted lines 801, 802, 803.

When a user of the apparatus desires to park in a given space 800, they first drive past the space, in a direction 810 generally perpendicular to the space. They activate the apparatus such that it carries out the mapping procedure of the first embodiment of the invention and maps the position of the lines 801, 802, 803. This map is stored in the processor 103.

In a second stage, the driver then drives the vehicle back toward the space in the direction of arrow 812. The apparatus has mapped the space 800 relative to the car 100 and so can tell where the vehicle is relative to the lines 801, 802, 803. The apparatus can therefore warn the driver should they overshoot the lines, be in danger of not fitting in the space or so on. The system can, if desired, calculate an optimal trajectory for the vehicle and display steering and/or speed instructions to the driver. In an alternative, the apparatus can directly control the engine, brakes and steering of the vehicle to drive the vehicle automatically into the space given the mapping of the space.

**Claims**

1.  A method of generating a map comprising the location of points relating to features (500), comprising moving a vehicle (100) past a scene, capturing (202) an image of a scene from the vehicle (100), detecting (204) points relating to features (500) in the captured image, and generating the map (230) by recording the position of the points, in which the method comprises capturing at least one further image as the vehicle (100) moves, detecting points relating to features (500) in the at least one further image, and comparing the points in the image and the at least one further image and in which lines are detected in the captured images and the step of comparing points in the image and the at least one further image comprises determining the angle, position or angle and length of the lines detected in each image relative to a datum and comparing the points corresponding to a detected line only if its angle, position or angle and length is within an expected range.

2.  A method of generating a map comprising the location of points relating to features, comprising moving a vehicle (100) past a scene, capturing (202) an image of a scene from the vehicle (100), detecting points (204) relating to features (500) in the captured image, and generating the map (230) by recording the position of the points, in which the method comprises capturing at least one further image as the vehicle (100) moves, detecting points relating to features (500) in the at least one further image, and comparing the points in the image and the at least one further image, in which the method comprises the step of measuring the motion of the vehicle (100) and from this predicting where the points in the at least one further image will be.

3.  The method of claim 1, in which the method further comprises the step of measuring the motion of the vehicle (100) and from this predicting where the points in the at least one further image will be.

4. The method of claim 2 or claim 3, in which the step of predicting where points will be in the at least one further image comprises modelling the motion of the vehicle and in which the step of modelling the motion of the vehicle is performed by using a predictive filter, such as a Kalman filter, or an Extended Kalman filter.

5. The method of any preceding claim, also comprising the step of updating the map (230) based on the comparison of the points between the image and the at least one further image.

6. The method of any preceding claim, in which the method comprises assigning each point recorded on the map (230) a confidence and increasing that confidence when the point is repeatedly detected.

7. The method of any preceding claim, in which the method includes the step of repeatedly moving the vehicle (100) past the scene, and capturing (202) images of the scene from the vehicle (100) each time the vehicle passes the scene; each time the vehicle (100) passes the scene, identifying points relating to features (500) in each image and using these points to update the map (230).

8. The method of claim 2 or claim 3 in which the method comprises the step of looking for points in the at least one further image in the region (502) where they are predicted to be.

9. The method of any preceding claim, in which the method comprises the step of determining the motion of the vehicle (230) by comparing the points in the image and the at least one further image.

10. The method of claim 2 or any preceding claim dependent thereon in which, lines are detected in the captured images and the step of comparing points in the image and the at least one further image comprises determining the angle, position or angle and length of the lines detected in each image relative to a datum and comparing the points corresponding to a detected line only if the angle, position or angle and length is within an expected range.

11. The method of claim 2 or claim 3 or any preceding claim dependent thereon in which, once the points have been compared, the position in the at least one further image of the points whose position was predicted in the at least one further image is calculated.

12. The method of claim 11 in which from the positions, the position of the vehicle (100) on the map (230) is calculated.

13. The method of claim 12 as dependent from claim 2 or claim 9 in which the positions are used to update the predictive filter.

14. The method of any preceding claim in which the step of recording the position of points on the map (230) includes only recording points that meet at least one criterion based on at least one of:

    • the confidence of that point
    • the feature (500) with which the point is associated, such as the shape, position and/or size of a line for which the point is an end.

15. A parking assistance apparatus for a vehicle (100), comprising a video camera (102) arranged to, in use, capture images of a parking space (800) as the vehicle is driven past the space, the parking space having visible lines (801, 802, 803) demarcating the space, and a processor (103) arranged to, in use, map the lines demarcating the space using the method of any preceding claim and captured images from the video camera, and guidance means to guide the vehicle into the space.

**Patentansprüche**

1. Ein Verfahren zur Erzeugung einer Landkarte bestehend aus der Position von Punkten, die sich auf Merkmale (500) beziehen, bestehend aus dem Fahren eines Fahrzeugs (100) an einem Ort vorbei, Erfassen (202) eines Bildes eines Orts vom Fahrzeug (100), Feststellen (204) von Punkten, die sich auf Merkmale (500) im erfassten Bild beziehen, und Erzeugen der Landkarte (230) durch Aufzeichnen der Position der Punkte, wobei die Methode das Erfassen von zumindest einem weiteren Bild, während das Fahrzeug (100) fährt, Feststellen von Punkten, die sich auf Merkmale (500) in dem zumindest einem weiteren Bild beziehen, sowie Vergleichen der Punkte auf dem Bild und dem zumindest einem weiteren Bild umfasst, und wobei im erfassten Bild Linien festgestellt werden, und der

7

Schritt des Vergleichens der Punkte auf dem Bild und dem zumindest einem weiteren Bild das Bestimmen des Winkels, der Position oder Winkel und der Länge der auf jedem Bild festgestellten Linien relativ zu einem Bezugspunkt und nur dann Vergleichen der Punkte, die einer festgestellten Linie entsprechen, wenn ihr Winkel, ihre Position oder Winkel und Länge innerhalb eines erwarteten Bereichs liegen, umfasst.

**2.** Ein Verfahren zur Erzeugung einer Landkarte bestehend aus der Position von Punkten, die sich auf Merkmale beziehen, bestehend aus dem Fahren eines Fahrzeugs (100) an einem Ort vorbei, Erfassen (202) eines Bildes eines Orts vom Fahrzeug (100), Feststellen von Punkten (204), die sich auf Merkmale (500) im erfassten Bild beziehen, und Erzeugen der Landkarte (230) durch Aufzeichnen der Position der Punkte, wobei die Methode das Erfassen von zumindest einem weiteren Bild, während das Fahrzeug (100) fährt, Feststellen von Punkten, die sich auf Merkmale (500) in dem zumindest einem weiteren Bild beziehen, sowie Vergleichen der Punkte auf dem Bild und dem zumindest einem weiteren Bild umfasst, wobei das Verfahren den Schritt des Messens der Bewegung des Fahrzeug (100) und hiervon die Vorhersage, wo die Punkte auf dem zumindest einen weiteren Bild sein werden, umfasst.

**3.** Das Verfahren entsprechend Anspruch 1, wobei das Verfahren weiterhin den Schritt des Messens der Bewegung des Fahrzeug (100) und hiervon die Vorhersage, wo die Punkte auf dem zumindest einen weiteren Bild sein werden, umfasst.

**4.** Das Verfahren entsprechend Anspruch 2 oder Anspruch 3, wobei der Schritt des Vorhersagnes, wo Punkte auf dem zumindest einen weiteren Bild sein werden, das Modellieren der Bewegung des Fahrzeugs umfasst, und wobei der Schritt des Modellierens der Bewegung des Fahrzeugs durch Verwenden eines prädiktiven Filters, wie z.b. eines Kalman-Filters oder eines erweiterten Kalman-Filters, durchgeführt wird.

**5.** Das Verfahren entsprechend einem der vorhergehenden Ansprüche, zu dem weiterhin der Schritt der Aktulisierung einer Landkarte (230) basierend auf dem Vergleich der Punkte zwischen dem Bild und dem zumindest einem weiteren Bild gehört.

**6.** Das Verfahren entsprechend einem der vorhergehenden Ansprüche, bei dem das Verfahren die Zuweisung einer Konfidenz zu jedem der auf der Landkarte (230) verzeichneten Punkte und Erhöhen dieser Konfidenz, wenn der Punkt wiederholt festgestellt wird, umfasst.

**7.** Das Verfahren entsprechend einem der vorhergehenden Ansprüche, bei dem das Verfahren den Schritt des wiederholten Vorbeifahrens des Fahrzeugt (100) am Ort vorbei und Erfassen (202) von Bildern des Orts vom Fahrzeug (100) jedesmal, wenn das Fahrzeug am Ort vorbeifährt und Identifizieren von Punkten, die sich auf Merkmale (500) auf jedem Bild beziehen, jedesmal, wenn das Fahrzeug (100) am Ort vorbeifährt und Verwenden dieser Punkte zur Aktualisierung der Landkarte (230) umfasst.

**8.** Das Verfahren entsprechend Anspruch 2 oder Anspruch 3, wobei das Verfahren den Schritt des Suchens nach Punkten auf dem zumindest einem weiteren Bild in dem Bereich (502), wo sie vorhergesagt sind, umfasst.

**9.** Das Verfahren entsprechend einem der vorhergehenden Ansprüche, wobei das Verfahren den Schritt der Bestimmung der Bewegung des Fahrzeugs (230) durch Vergleichen der Punkte auf dem Bild und dem zumindest einem weiteren Bild umfasst.

**10.** Das Verfahren entsprechend Anspruch 2 oder einem der vorhergehenden hiervon abhängigen Ansprüche, bei dem auf den erfassten Bildern Linien festgestellt werden und der Schritt des Vergleichens von Punkten auf dem Bild und dem zumindest einem weiteren Bild das Bestimmen des Winkels, der Position oder des Winkels und der Länge der auf jedem Bild festgestellten Linien relativ zu einem Bezugspunkt und nur dann Vergleichen der Punkte, die einer festgestellten Linie entsprechen, wenn ihr Winkel, ihre Position oder Winkel und Länge innerhalb eines erwarteten Bereichs liegen, umfasst.

**11.** Das Verfahren entsprechend Anspruch 2 oder Anspruch 3 oder einem der vorhergehenden hiervon abhängigen Ansprüche, bei dem sobald die Punkte verglichen wurden, die Position der Punkte auf dem zumindest einem weiteren Bild, deren Position auf dem zumindest einem weiteren Bild vorhergesagt wurde, errechnet wird.

**12.** Das Verfahren entsprechend Anspruch 11, bei dem von den Positionen die Position des Fahrzeugs (100) auf der Landkarte (230) errechnet wird.

**13.** Das Verfahren entsprechend Anspruch 12 in Abhängigkeit von Anspruch 2 oder Anspruch 9, bei dem die Positionen zur Aktualisierung des prädiktiven Filters verwendet werden.

**14.** Das Verfahren entsprechend einem der vorhergehenden Ansprüche, bei dem der Schritt des Aufzeichnen der Position von Punkten auf der Landkarte (230) nur das Aufzeichnen der Punkte umfasst, die zumindest ein Kriterium basierend auf mindestens einem der Folgenden erfüllen:

• die Konfidenz dieses Punktes
• Das Merkmal (500), mit der Punkt assoziiert ist, wie z.B. Form, Position und/oder Größe einer Linie, für der der Punkt ein Ende ist.

**15.** Eine Parkhilfevorrichtung für ein Fahrzeug (100) bestehend aus einer Videokamera (102), die so angeordnet ist, dass sie bei Verwendung Bilder eines Parkplatzes (800) erfasst, während das Fahrzeug am Parkplatz vorbeigefahren wird, wobei der Parkplatz sichtbare Linien (801, 802, 803) hat, die den Platz eingrenzen, und einem Prozessor (103), der so angeordnet ist, dass er bei Verwendung die Linien, die den Platz eingrenzen, unter Verwendung des Verfahrens eines der vorhergehenden Ansprüche und der von der Videokamera erfassten Bilder kartographiert, sowie einer Führungsvorrichtung, um das Fahrzeug in den Parkplatz zu führen.

## Revendications

**1.** Un procédé de génération d'une carte contenant l'emplacement de points relatifs à des caractéristiques (500), comprenant le déplacement d'un véhicule (100) devant une scène, la capture (202) d'une image d'une scène à partir du véhicule (100), la détection (204) de points relatifs à des caractéristiques (500) dans l'image capturée et la génération de la carte (230) par l'enregistrement de la position des points, le procédé comprenant la capture d'au moins une autre image lorsque le véhicule (100) se déplace, la détection de points relatifs à des caractéristiques (500) dans la au moins une autre image et la comparaison des points dans l'image et dans la au moins une autre image, et où des lignes sont détectées dans les images capturées et l'opération de comparaison de points dans l'image et dans la au moins une autre image comprend la détermination de l'angle, la position ou l'angle et la longueur des lignes détectées dans chaque image par rapport à une donnée et la comparaison des points correspondant à une ligne détectée uniquement si son angle, sa position ou son angle et sa longueur se situent à l'intérieur d'une plage attendue.

**2.** Un procédé de génération d'une carte contenant l'emplacement de points relatifs à des caractéristiques, comprenant le déplacement d'un véhicule (100) devant une scène, la capture (202) d'une image d'une scène à partir du véhicule (100), la détection de points (204) relatifs à des caractéristiques (500) dans l'image capturée et la génération de la carte (230) par l'enregistrement de la position des points, le procédé comprenant la capture d'au moins une autre image lorsque le véhicule (100) se déplace, la détection de points relatifs à des caractéristiques (500) dans la au moins une autre image et la comparaison des points dans l'image et dans la au moins une autre image, le procédé comprenant l'opération de mesure du mouvement du véhicule (100) et, à partir de cette mesure, la prédiction de l'endroit où les points dans la au moins une autre image se trouveront.

**3.** Le procédé selon la Revendication 1, le procédé comprenant en outre l'opération de mesure du mouvement du véhicule (100) et à partir de cette mesure, la prédiction de l'endroit où les points dans la au moins une autre image se trouveront.

**4.** Le procédé selon la Revendication 2 ou 3, où l'opération de prédiction de l'endroit où les points se trouveront dans la au moins une autre image comprend la modélisation du mouvement du véhicule, et où l'opération de modélisation du mouvement du véhicule est exécutée au moyen d'un filtre prédictif, tel qu'un filtre de Kalman ou un filtre de Kalman étendu.

**5.** Le procédé selon l'une quelconque des Revendications précédentes, comprenant également l'opération d'actualisation de la carte (230) en fonction de la comparaison des points entre l'image et la au moins une autre image.

**6.** Le procédé selon l'une quelconque des Revendications précédentes, le procédé comprenant l'attribution à chaque point enregistré sur la carte (230) d'une valeur de confiance et l'augmentation de cette valeur de confiance lorsque le point est détecté de manière répétée.

7. Le procédé selon l'une quelconque des Revendications précédentes, le procédé comprenant l'opération de déplacement du véhicule de manière répétée (100) devant la scène et la capture (202) d'images de la scène à partir du véhicule (100) chaque fois que le véhicule passe devant la scène ; chaque fois que le véhicule (100) passe devant la scène, l'identification de points relatifs à des caractéristiques (500) dans chaque image et l'utilisation de ces points de façon à actualiser la carte (230).

8. Le procédé selon la Revendication 2 ou 3, où le procédé comprend l'opération de recherche de points dans la au moins une autre image dans la zone (502) dans laquelle ils sont prévus se trouver.

9. Le procédé selon l'une quelconque des Revendications précédentes, où le procédé comprend l'opération de détermination du mouvement du véhicule (230) par la comparaison des points dans l'image et dans la au moins une autre image.

10. Le procédé selon la Revendication 2 ou selon l'une quelconque des Revendications précédentes dépendante de celle-ci, où des lignes sont détectées dans les images capturées et l'opération de comparaison de points dans l'image et dans la au moins une autre image comprend la détermination de l'angle, la position ou l'angle et la longueur des lignes détectées dans chaque image par rapport à une donnée et la comparaison des points correspondant à une ligne détectée uniquement si l'angle, la position ou l'angle et la longueur se situent à l'intérieur d'une plage attendue.

11. Le procédé selon la Revendication 2 ou 3 ou selon l'une quelconque des Revendications précédentes dépendante de celles-ci, où, une fois que les points ont été comparés, la position dans la au moins une autre image des points dont la position a été prédite dans la au moins une autre image est calculée.

12. Le procédé selon la Revendication 11 où, à partir des positions, la position du véhicule (100) sur la carte (230) est calculée.

13. Le procédé selon la Revendication 12 lorsqu'elle dépend de la Revendication 2 ou 9 où les positions sont utilisées de façon à actualiser le filtre prédictif.

14. Le procédé selon l'une quelconque des Revendications précédentes où l'opération d'enregistrement de la position de points sur la carte (230) comprend uniquement l'enregistrement de points qui répondent à au moins un critère en fonction d'au moins un élément parmi :

   • la valeur de confiance de ce point,
   • la caractéristique (500) à laquelle le point est associé, telle que la forme, la position et/ou la taille d'une ligne pour laquelle le point est une extrémité.

15. Un appareil d'aide au stationnement pour un véhicule (100) comprenant une caméra vidéo (102) agencée de façon à, en utilisation, capturer des images d'un espace de stationnement (800) lorsque le véhicule est conduit devant cet espace, l'espace de stationnement possédant des lignes visibles (801, 802, 803) démarquant l'espace, et un processeur (103) agencé de façon à, en utilisation, cartographier les lignes démarquant l'espace au moyen du procédé selon l'une quelconque des Revendications précédentes et d'images capturées à partir de la caméra vidéo, et un moyen de guidage destiné à guider le véhicule dans l'espace.

**Fig. 1**

**Detected Feature**

**Road Surface**

*Fig. 2*

**Map**

Feature Compared

Localised Position

*Fig. 3*

```
                    ┌──────────────────┐
                    │   Capture         │   202
                    │   Image           │
                    └──────────────────┘
                            │
                    ┌──────────────────┐
                    │   Extract         │   204
                    │   Features        │
                    └──────────────────┘
                            │
                    ┌──────────────────┐
                    │   Transform       │   206
                    │   to              │
                    │   Plan View       │
                    └──────────────────┘
                            │
                    ┌──────────────────┐
                    │ Associate features│
                    │ with Previous     │
                    │ Features or Store │   220
                    │ as a New Feature  │
                    └──────────────────┘
                            │
                    ┌──────────────────┐
                    │ Update Feature    │
                    │ Locations and Other│  222
                    │ States e.g. Ego Motion│
                    │ of the Mapping System│
                    └──────────────────┘
                            │
                    ┌──────────────────┐
                    │ Predict Location of│  214
                    │ Features Next     │
                    │ Iteration         │
                    └──────────────────┘
```

Start Map Creation Relative to Current Position and Heading — 200

Select Map Features — 230

Transform Map to Desired Co-ordinate Frame and Orientation — 232

*Fig. 4*

13

*Fig. 5*

*Fig. 6*

**Fig. 7**

EP 2 047 213 B1

*Fig. 8*

Fig. 9

**EP 2 047 213 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040167669 A

- JP 10264841 A